# DEMANDE DE BREVET EUROPEEN

(11) **EP 0 893 904 A1**
(43) Date de publication de la demande: **27.01.1999**
(21) Numéro de dépôt: 98202369.9
(22) Date de dépôt: 15.07.1998
(51) Int. Cl.: H04M 3/54

(54) **Procédé et dispositif de transfert d'appels**

(30) Priorité: 22.07.1997 FR 9709292
(71) Demandeur: Koninklijke Philips Electronics N.V., 5621 BA Eindhoven (NL)
(72) Inventeur: André, Jean-Marie, 75008 Paris (FR)
(74) Mandataire: Chaffraix, Jean

(57) **Abrégé**

L'invention concerne un procédé de transfert d'appels depuis un premier poste (10) d'un premier réseau de télécommunications (PSTN) comportant des moyens de transfert d'appels intégrés, vers une station mobile (12) reliée à un réseau de radiocommunications (14). Un dispositif auxiliaire (16) est destiné à déclencher automatiquement une commande d'activation et/ou de désactivation de transfert d'appels par la transmission de messages prédéfinis, depuis ledit dispositif auxiliaire (16), à destination des moyens de transfert intégrés du réseau (PSTN). Le dispositif auxiliaire (16) peut être implémenté de façon avantageuse dans un chargeur de station mobile et ainsi, il comporte des moyens de détection (36) de la présence de la station mobile (12) pour déclencher automatiquement un transfert d'appels lorsque ladite station (12) n'est pas sur son chargeur.

Applications : téléphonie.

## Description

L'invention concerne un procédé de transfert d'appels depuis un premier poste d'un premier réseau de télécommunications comportant des moyens de transfert d'appels intégrés, vers un deuxième poste, un dispositif auxiliaire étant susceptible de déclencher automatiquement une commande d'activation et/ou de désactivation dudit transfert d'appels.

Elle concerne également un dispositif destiné à effectuer des transferts d'appels depuis un poste d'un réseau de télécommunications comportant des moyens de transfert d'appels intégrés, vers une station mobile d'un réseau de radiocommunications.

L'invention s'applique de façon avantageuse aux transferts d'appels réalisés entre un poste fixe du réseau commuté public classique et une station mobile reliée à un réseau de radiotélécommunications.

De tels procédé et dispositif de transfert d'appels sont connus notamment de la demande de brevet européen n° 0 639 034 A1. Ce document décrit un procédé et un dispositif de transfert d'appels à partir d'une station mobile d'un réseau de radiocommunications vers un autre poste. Le transfert d'appels est effectué par l'intermédiaire de la station mobile communiquant à cet effet par voie radio avec le réseau. Des commandes de transferts d'appels sont ainsi émises à partir de la station mobile vers des moyens de transfert d'appels intégrés dudit réseau de radiocommunications.

Ce procédé nécessite donc que tous les appels entrants soient destinés à la station mobile qui les aiguille ensuite automatiquement vers un autre poste via les moyens de transfert intégrés du réseau de radiocommunications, si les conditions pour déclencher un transfert d'appels sont réunies.

Ce procédé comporte cependant un inconvénient majeur lorsque les tarifs de communication vers un numéro de station mobile sont globalement plus élevés que ceux destinés à un numéro de poste fixe (ce qui est assez courant). En particulier, dans le cas où l'on prévoit une utilisation occasionnelle de station mobile, il est plus avantageux que les appels soient systématiquement reçus par le poste fixe puis éventuellement transférés vers la station mobile.

En effet, selon le procédé décrit dans le document cité, l'appelant paye toujours le prix d'une communication vers une station mobile, quel que soit le poste récepteur final. Cela peut être préjudiciable dans le cas d'appels de clients vers un prestataire de services ayant une activité très concurrentielle. L'exemple type où ce procédé n'est pas satisfaisant est celui d'un client choisissant au hasard dans l'annuaire téléphonique un dépanneur à domicile. Les numéros de stations mobiles étant caractéristiques, le client aura tendance à appeler en premier un numéro de poste fixe.

Un objet de l'invention est de remédier à cet inconvénient en fournissant un procédé et un dispositif de transfert d'appels qui impute le surcoût des communications vers une station mobile à l'appelé. Dans ce but, seul le numéro d'appel du poste vers lequel l'appel coûte le moins cher est communiqué aux appelants éventuels. Les transferts d'appels sont alors effectués automatiquement depuis ce poste vers la station mobile sur laquelle l'utilisateur est joignable et le coût de la communication depuis le premier poste vers la station mobile est ainsi facturé à l'appelé.

L'invention prévoit en outre d'utiliser des moyens de transfert d'appels existant au sein d'un réseau de télécommunications auquel est relié un poste dit fixe dont les communications entrantes sont économiques et de les commander à distance de façon transparente pour l'appelant à partir d'un dispositif électronique auxiliaire connecté à ce réseau.

Pour cela, un procédé du genre mentionné dans le préambule est remarquable en ce que ladite commande est déclenchée par la transmission de messages prédéfinis, depuis ledit dispositif auxiliaire, à destination desdits moyens de transfert intégrés.

Selon une caractéristique importante de l'invention, un procédé du genre décrit ci-dessus est remarquable en ce qu'il comporte une étape de détection de présence de ladite station radiomobile par ledit dispositif auxiliaire pour déclencher ladite commande. Ainsi, lorsque la station mobile est détectée, les appels sont normalement reçus par le poste fixe. Sinon, ils sont automatiquement transférés depuis le poste fixe vers la station mobile, aux frais de l'appelé.

L'invention prévoit également un dispositif auxiliaire tel que mentionné dans le préambule, remarquable en ce qu'il comporte des moyens pour transmettre des messages d'activation et/ou désactivation de transfert d'appels auxdits moyens de transfert intégrés ainsi que des moyens pour conserver en mémoire lesdits messages.

De préférence, ce dispositif est intégré dans un chargeur de batterie destiné à recevoir une station mobile.

La description suivante, faite en regard des dessins ci-annexés, le tout donné à titre d'exemple non limitatif fera bien comprendre comment l'invention peut être réalisée.
La figure 1 illustre en A et B deux situations différentes dans lesquelles un procédé est mis en oeuvre conformément à l'invention.
La figure 2 illustre un mode de réalisation du procédé selon l'invention.
La figure 3 représente un mode de réalisation du dispositif selon l'invention.
La figure 4 représente un schéma bloc d'un dispositif auxiliaire selon l'invention.

Dans ces figures, les éléments communs portent les mêmes références.

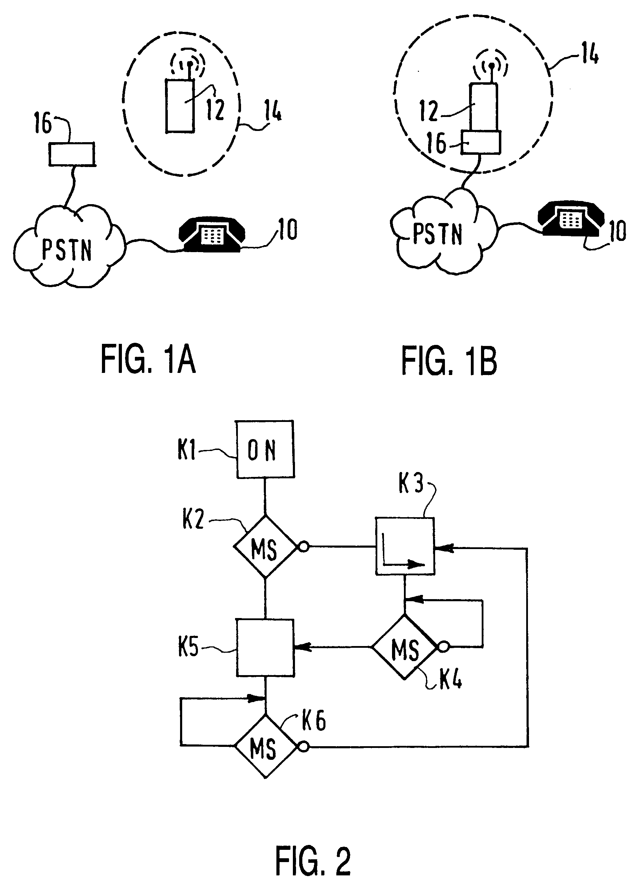

Sur la figure 1, un poste fixe 10 est relié au réseau commuté public PSTN (de l'anglais Public Switched Telephone Network) et est doté d'un numéro d'appel Y sur ce réseau. Une station mobile (ou radiotéléphone) 12 fonctionnant à l'aide de batteries rechargeables est reliée à un réseau de radiocommunications mobiles 14, par exemple conforme à la norme GSM (de l'anglais Global System for Mobile communications). Son numéro d'appel est noté X. Un dispositif de recharge (ou chargeur) 16 destiné à recevoir le téléphone 12 pour recharger ses batteries est également relié au réseau PSTN. Selon une variante de réalisation de l'invention, le poste 10 et le chargeur 16 peuvent être reliés à une même ligne téléphonique.

Selon le principe de l'invention, l'utilisateur, par exemple un dépanneur à domicile, souhaite que les communications reçues sur son radiotéléphone lui soient facturées. Il ne communique donc à ses correspondants que son numéro de poste fixe Y. Grâce au procédé de transfert d'appels selon l'invention, les communications reçues par son poste fixe alors qu'il est en déplacement muni de son radiotéléphone, sont transférées vers le numéro d'appel X du radiotéléphone.

Dans la première situation illustrée en A à la figure 1, on suppose que l'utilisateur est en train d'effectuer un dépannage à l'extérieur et a emporté son radiotéléphone pour rester joignable. Le chargeur a alors détecté l'absence du radiotéléphone et a donc activé le transfert d'appels vers le numéro X.

Dans la deuxième situation illustrée en B à la figure 1, l'utilisateur est à son domicile et son radiotéléphone est placé sur son chargeur. Celui-ci a détecté sa présence et a donc désactivé le transfert d'appels.

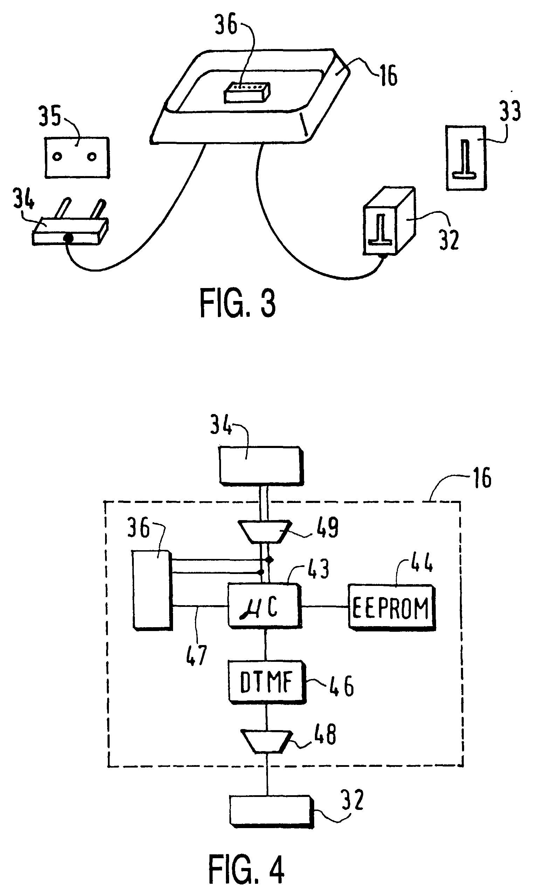

La figure 2 illustre un mode de réalisation du procédé selon l'invention. A la case K1 (ON), le chargeur est mis sous tension. Des moyens adaptés permettent de détecter la présence de la station mobile MS sur le chargeur 16. Ces moyens seront décrits en détails aux figures 3 et 4. Un premier test de détection de présence du radiotéléphone est effectué à la case K2.

Si le résultat de ce test est négatif, le procédé se poursuit à la case K3 par le déclenchement d'un transfert d'appels. Un message d'activation est alors envoyé aux moyens de transfert d'appels préexistant au sein du réseau PSTN. Selon le mode de réalisation préféré de l'invention, ce message consiste en une séquence de type DTMF (de l'anglais Dual Tone Multifrequency) émise depuis le chargeur à travers le réseau PSTN. Cette séquence contient les informations numériques nécessaires pour activer un transfert conformément à la procédure requise par le réseau PSTN, ainsi qu'une information contenant le numéro d'appel X du radiotéléphone vers lequel les communications doivent être transférées. Cette séquence est préalablement stockée en mémoire dans le chargeur et est transmise à travers le réseau PSTN sur la commande d'activation du chargeur déclenchée par la détection de l'absence du téléphone mobile 12 sur son chargeur.

Une fois le transfert effectué, le procédé se poursuit à la case K4 où les moyens de détection du chargeur testent périodiquement ou en continu la présence de la station mobile. Le procédé reste dans cet état tant que la présence de la station mobile n'est pas détectée. La détection de la présence de la station mobile place alors le procédé dans l'état représenté à la case K5.

Si le résultat du premier test K2 est positif, le procédé se poursuit à la case K5 par la désactivation du transfert d'appels. Une séquence DTMF de désactivation est envoyée aux moyens de transfert d'appels du réseau PSTN conformément à la procédure requise par le réseau PSTN. Puis un nouveau test de présence de la station mobile est effectué à la case K6. Le procédé reste dans cet état tant que l'absence de la station mobile n'est pas détectée. Si le chargeur détecte effectivement l'absence de la station mobile, on passe à la case K3 où le transfert d'appels est activé.

Dans une variante de réalisation du procédé selon l'invention, chaque activation ou désactivation de transfert d'appels survenant (dans les états K3 et K5 respectivement) après une détection d'absence ou de présence de la station mobile, n'est déclenchée qu'après un certain laps de temps comprenant le décompte d'une temporisation suivi d'une confirmation de cette détection. Le rôle de cette temporisation est d'éviter les erreurs de détection ainsi que le déclenchement d'une commande à chaque fois que le radiotéléphone est déconnecté de son chargeur pendant un court instant.

La figure 3 montre comment le chargeur 16 est relié au réseau PSTN, par l'intermédiaire d'un connecteur normalisé 32 et d'une prise 33, et comment il est relié à une source d'alimentation par l'intermédiaire d'un connecteur mâle 34 et d'une prise de courant femelle 35.

Un connecteur de charge mâle 36 comportant plusieurs broches est destiné à coopérer avec un connecteur de charge femelle du radiotéléphone pour fermer une boucle de recharge et ainsi transmettre le courant de charge depuis le chargeur vers les batteries du radiotéléphone. Selon le mode de réalisation préféré de l'invention, le connecteur 36 comporte également des moyens pour détecter la présence du radiotéléphone sur le chargeur. Ces moyens seront décrits en référence à la figure 4.

Pour utiliser le dispositif 16 uniquement pour sa fonction de charge, il suffit de débrancher le connecteur 32 de la prise 33.

La figure 4 illustre le fonctionnement du chargeur 16 selon l'invention. Un microcontrôleur (µC) 4 bits (par exemple) 43, gère les échanges d'informations entre le connecteur 36, une mémoire de type EEPROM 44 et un générateur de fréquences DTMF 46.

Le connecteur 36 détecte la présence du radiotéléphone par une méthode classique dite de rebouclage. Le connecteur 36 comporte une broche 47 dont la tension peut prendre deux valeurs différentes en fonction de la présence ou de l'absence du radiotéléphone. La lecture de cette tension par le microcontrôleur 43 permet ainsi de détecter la présence du radiotéléphone sur le chargeur.

La mémoire 44 est destinée à stocker les séquences numériques DTMF de transfert d'appels (variant selon les réseaux dont on souhaite utiliser les moyens de transfert d'appels intégrés) ainsi que le numéro d'appel du poste vers lequel le transfert doit être effectué. La programmation de l'EEPROM 44 peut être réalisée à tout moment et de façon simple par des moyens connus.

Le générateur 46 permet d'envoyer les fréquences DTMF à travers le réseau PSTN par l'interface de ligne 48. Un convertisseur 49 sert à convertir le courant alternatif en courant continu pour alimenter les différents composants du chargeur 16.

Quand le radiotéléphone 12 n'est pas sur le chargeur 16, la boucle de recharge est ouverte et la tension lue sur la broche 47 par le microcontrôleur 43 indique l'absence du radiotéléphone. Une temporisation est alors activée. Si la tension lue sur la broche 47 ne varie pas de façon significative avant l'expiration de cette temporisation, le microcontrôleur 43 reconnait alors l'absence du radiotéléphone et va lire sur l'EEPROM 44 la séquence correspondant à une activation de transfert d'appels pour la transmettre au générateur DTMF 46. Celui-ci L'envoie ensuite à travers le réseau par l'interface de ligue 48.

Quand le radiotéléphone 12 est posé sur son chargeur 16, la boucle de recharge est fermée et la tension lue par le microcontrôleur 43 sur la broche 47 indique la présence du radiotéléphone. Si cette tension ne varie pas avant l'expiration d'une temporisation, le microcontrôleur 43 va lire sur l'EEPROM 44 la séquence correspondant à une désactivation de transfert d'appels pour la transmettre au générateur DTMF 46, puis au réseau PSTN.

Dans un autre mode de réalisation dit "manuel" de l'invention, une activation ou désactivation de transfert d'appels peut être déclenchée par une commande manuelle à partir d'un dispositif auxiliaire. Celui-ci comporte alors les mêmes caractéristiques que le dispositif représenté à la figure 4 sauf à remplacer le connecteur de charge 36 par un élément d'interface comportant par exemple un bouton de commande de transfert d'appels destiné à être activé par l'utilisateur. L'activation de cette commande de transfert est ensuite détectée par le microcontrôleur 43 pour effectuer ou annuler un transfert d'appels comme dans le mode de réalisation dit "automatique" décrit précédemment.

Ce mode de réalisation "manuel" est avantageux dans le cas ou l'utilisateur ne souhaite pas que des transferts d'appels soient systématiquement effectués dès qu'il utilise son radiotéléphone hors du chargeur. En effet, selon le principe de l'invention, tous les transferts d'appels reçus sur son radiotéléphone lui sont facturés. Un tel mode de réalisation dit "manuel" apporte ainsi à l'utilisateur plus de flexibilité dans la gestion des transferts d'appels que le mode précédent dit "automatique".

L'invention s'applique évidemment à d'autres systèmes de réseaux que ceux illustrés dans les figures et n'est pas limitée aux modes de réalisation qui viennent d'être décrits et représentés. D'autres variantes de l'invention apparaîtront à l'homme de l'art, en particulier par substitution de moyens techniques équivalents, ces variantes ne sortant pas du cadre de l'invention.

## Revendications

1. Procédé de transfert d'appels depuis un premier poste d'un premier réseau de télécommunications comportant des moyens de transfert d'appels intégrés, vers un deuxième poste, ledit procédé mettant en oeuvre un dispositif auxiliaire pour déclencher automatiquement une commande d'activation et/ou de désactivation dudit transfert d'appels,
**caractérisé** en ce que ladite commande est déclenchée par la transmission de messages prédéfinis, depuis ledit dispositif auxiliaire, à destination desdits moyens de transfert intégrés.

2. Procédé de transfert d'appels selon la revendication 1, caractérisé en ce que ledit deuxième poste est une station mobile d'un réseau de radiocommunications.

3. Procédé de transfert d'appels selon la revendication 2, caractérisé en ce qu'il comporte une étape de détection de présence et/ou d'absence de ladite station mobile par ledit dispositif auxiliaire pour déclencher ladite commande.

4. Procédé de transfert d'appels selon la revendication 3, caractérisé en ce que ladite détection de la présence de ladite station mobile déclenche la désactivation dudit transfert d'appels.

5. Procédé de transfert d'appels selon la revendication 3, caractérisé en ce que ladite détection de l'absence de ladite station mobile déclenche l'activation dudit transfert d'appels.

6. Procédé de transfert d'appels selon l'une des revendications 1 à 5, caractérisé en ce que ledit dispositif auxiliaire est un support destiné à recevoir ladite station mobile.

7. Procédé de transfert d'appels selon l'une des revendications 1 à 6, caractérisé en ce qu'il comprend les étapes suivantes :
- mise en mémoire de séquences numériques de type DTMF (de l'anglais Dual Tone Multifrequency) correspondant à des procédures de transfert d'appels,
- détection de la présence ou de l'absence de la station mobile au niveau dudit dispositif auxiliaire,
- si l'absence est détectée, envoi auxdits moyens de transfert d'appels intégrés de l'une des séquences numériques stockées en mémoire pour activer un transfert,
- si la présence est détectée, envoi auxdits moyens de transfert d'appels intégrés de l'une des séquences numériques stockées en mémoire pour désactiver ledit transfert.

8. **Dispositif** destiné à effectuer des transferts d'appels depuis un poste d'un réseau de télécommunications comportant des moyens de transfert d'appels intégrés, vers une station mobile d'un réseau de radiocommunications,
**caractérisé** en ce qu'il comporte des moyens pour transmettre des messages d'activation et/ou désactivation de transfert d'appels auxdits moyens de transfert intégrés ainsi que des moyens pour conserver en mémoire lesdits messages.

9. Dispositif selon la revendication 8, caractérisé en ce qu'il comporte :
- des moyens de détection de l'absence et/ou la présence de ladite station mobile,
- un premier moyen de connexion pour réaliser une liaison vers le réseau de télécommunications,
- un deuxième moyen de connexion pour établir une liaison avec la station mobile,
- un moyen de stockage pour mémoriser des séquences numériques destinées à constituer lesdits messages d'activation et/ou désactivation,
- un moyen pour générer lesdites séquences numériques à travers le réseau de télécommunications,
- un moyen d'alimentation pour fournir du courant audit dispositif.

10. Dispositif selon l'une des revendications 8 ou 9, caractérisé en ce qu'il constitue un dispositif de recharge pour recharger une batterie d'alimentation destinée à alimenter en courant ladite station mobile.
